# NEUE EUROPÄISCHE PATENTSCHRIFT

(11) **EP 0 491 424 B2**
(45) Veröffentlichungstag und Bekanntmachung des Hinweises auf die Entscheidung über den Einspruch: **15.10.1997**
(45) Hinweis auf die Patenterteilung: 24.05.1995
(21) Anmeldenummer: 91203223.2
(22) Anmeldetag: 10.12.1991
(51) Int. Cl.: A47J 43/08, D06F 37/30, H02K 29/00, H02K 21/22, H02K 5/15

(54) **Elektrisches Haushaltsgerät**
Domestic electric appliance
Appareil ménager électrique

(30) Priorität: 19.12.1990 DE 4040596
(43) Veröffentlichungstag der Anmeldung: 24.06.1992
(73) Patentinhaber: Philips Patentverwaltung GmbH, 22335 Hamburg (DE); Philips Electronics N.V., 5621 BA Eindhoven (NL)
(72) Erfinder: Bolte, Ekkehard, Dr. Ing., W-5100 Aachen (DE); Steinbusch, Hans, NL-6373 VN Landgraaf (NL); Mugge, Jan, NL-9301 TP Roden (NL)
(74) Vertreter: Peuckert, Hermann, Dipl.-Ing.

(56) Entgegenhaltungen:
- EP-A- 0 239 261
- EP-A- 0 339 367
- EP-A- 0 361 775
- WO-A-88/07285
- DE-A- 1 763 489
- GB-A- 2 044 382
- GB-A- 2 183 932
- US-A- 3 683 248
- US-A- 3 922 590
- US-A- 4 682 065
- US-A- 4 965 476

## Beschreibung

Die Erfindung bezieht sich auf eine elektrische Küchenmaschine mit einem Antriebsmotor mit Ständer und Läufer, der in einem Gerätesockel angeordnet ist und ein auf dem Sockel stehendes schüsselartiges Gefäß bzw. ein im Gefäß angeordnetes Werkzeug um seine Drehachse in Umlauf versetzt.

Aus der DE-A-17 63 489 ist eine Misch- und Zerkleinerungsvorrichtung bekannt, bei der ein becherartiger Mischbehälter auf einem Sockel steht, in dem ein elektrischer Antriebsmotor angeordnet ist. Der elektrische Antriebsmotor ist ein mit Bürsten arbeitender Elektrommotor, dessen Welle die Messer in dem Mixer unmittelbar antreibt und der sich als hochbauendes eigenständiges Bauteil im Sockel befindet.

Bei anderen Haushaltsküchenmaschinen befindet sich der Motor seitlich des Sockels und des schüsselartigen Gefäßes.

Üblicherweise werden bei derartigen Geräten Universalmotoren eingesetzt, die mit einer im Vergleich zur Arbeitsdrehzahl hohen Motordrehzahl arbeiten, die mittels eines mechanischen Getriebes mit einem übersetzungsverhältnis von 1 : 10 bis 15 das Werkzeug in dem schüsselartigen Gefäß oder das Gefäß selbst antreiben. Der Motor selbst stellt bei diesen Konzepten eine elektromechanisch selbständige Komponente dar. Die Kraftübertragung zwischen Motorwelle und Werkzeug oder Schüssel erfolgt über Keilriemen-, Zahnriemen- oder Zahnradgetriebe.

Damit sind diese herkömmlichen Küchenmaschinen relativ voluminös. Die hohe Motordrehzahl gegenüber der wesentlich geringeren Werkzeug- oder Schüsseldrehzahl führt sowohl zur starken Geräuschentwicklung des Motors bis auch zu einer deutlichen und störenden Geräuschentwicklung des Getriebes. Die Läuferverluste der Universalmotoren erfordern eine Lüftung, die den Geräteaufwand und die Geräusche nochmals erhöhen. Die mechanischen Kommutatoren führen zu Verschleiß und auch zu Bürstengeräuschen. Die eingesetzten mechanischen Getriebe sind konstruktiv aufwendig und störanfällig.

Aus der GB-A-21 83 932 A ist eine Turbulator-Waschmaschine mit einem Motor bekannt, der als getrennte Komponente unterhalb des Waschbottichs hängt. Der Motor, der das Turbulatorrad im Waschbottich unmittelbar antreibt, hat einen scheibenförmigen Läufer. Die magnetisch aktiven Motorteile von Ständer und Läufer erstrecken sich ringförmig längs des Motoraußenbereiches. Der Innenraum ist gefüllt mit einer Ständer-Aluminiumplatte, die im Mittenbereich abgestützt ist und die die außen gelegenen aktiven Ständerteile trägt. Bei der Gestaltung dieses Motors bestehen keine Raum- oder Konstruktionszwänge, die sich bei Haushaltsküchenmaschinen ergeben.

Es ist Aufgabe der Erfindung, eine elektrische Küchenmaschine zu schaffen, die aufgrund ihres Maschinenkonzeptes deutlich geräuschärmer arbeitet, die eine geringere Wärmeentwicklung und weniger Verschleiß aufweist.

Die gestellte Aufgabe ist bei einem elektrischen Haushaltsgerät der eingangs erwähnten Art erfindungsgemäß dadurch gelöst, daß
- der Ständer und der Läufer des Motors scheibenförmig ausgebildet sind mit einem Verhältnis von axialer Länge zu Durchmesser von ca. 1 : 10,
- der Ständer und der Läufer je einen Durchmesser aufweisen, der dem Gefäßdurchmesser im wesentlichen entspricht,
- sich die magnetisch aktiven Motorteile von Ständer bzw. Läufer ringförmig längs der Motoraußenbereiche erstrecken, während der Motorinnenraum unmagnetisch ausgebildet ist,
- der Läufer einen vielpoligen Dauermagnetring trägt,
- der Antriebsmotor elektronisch kommutiert ist, und
- der Gerätesockel als Motorgehäuse ausgebildet ist.

Durch eine derartige Ausgestaltung wird infolge eines erheblich verlängerten Antriebshebelarmes das Drehmoment des Antriebsmotors vergrößert, ohne daß eine Vergrößerung der aktiven Antriebsmotormasse erfolgt. Auch sind die Läuferverluste verringert. Dies hat nun wieder zur Folge, daß auf eine spezielle Lüftung verzichtet werden kann; der Wegfall eines Lüfters verhindert das Entstehen von Lüftergeräuschen. Der Antriebsmotor selbst läuft nur mit der Geschwindigkeit des Werkzeuges oder Gefäßes um und verursacht kaum noch Laufgeräusche. Weil das Getriebe wegfällt, können auch keine Getriebegeräusche auftreten.

Der Motor wird elektronisch kommutiert. Dies kam mit oder ohne Positionssensor geschehen. Die Werkzeug- oder Gefäß-Drehgeschwindigkeit kann wegen der elektronisch vorgegebenen Motordrehzahl im Leerlauf und bei Belastung in etwa gleich bleiben.

Ergonomisch läßt sich dieses elektrische Haushaltsgerät günstig aufbauen, weil nach einer weiteren Ausgestaltung der Erfindung der Sockel kaum höher zu sein braucht als ein Sockel, in dem sich ein Getriebe befindet, das von einem seitlich stehenden Motor angetrieben wird. An der Sockelvorderseite lassen sich Schaltelemente zu Bedienen des Gerätes anbringen.

Nach einer weiteren Ausgetaltung der Erfindung ist vorgesehen, daß der Ständer aus einem im Gerätegehäuse gelagerten Eisenring mit nach außen vorstehenden, bewickelten Polstegen besteht und daß der Läufer die Polstege längs des Ständerumfanges ringförmig umschließt mit sich im Ring in Umfangsrichtung aneinander anschließenden Dauermagneten wechselnder Polarität längs des Luftspaltes zwischen Ständerpolen und Läufermagneten. Auf diese Weise läßt sich eine flache Ausbildung des Motors besonders gut verwirklichen.

Nach einer weiteren Ausgestaltung der Erfindung ist vorgesehen, daß der Ständer-Eisenring auf die Bodenplatte des Sockels aufgesetzt ist, wobei der Ständer-Eisenring am aus der Bodenplatte vorstehenden, magnetisch neutralen Klemmelementen festgelegt ist. Der Motor als solches bildet damit keine selbständige Einheit mehr. Die Bodenplatte nimmt den Ständer-Eisenring auf und legt ihn in der vorgegebenen Weise fest. Das Gehäuse des Gerätes ist damit zugleich Motorgehäuse.

Nach einer weiteren Ausgestaltung der Erfindung ist vorgesehen, daß der Läufer des Antriebsmotors einen von der Läuferwelle getragenen flachen Zylinder aufweist, der einen Ring mit den am Luftspalt befindlichen Dauermagneten trägt.

Nach einer weiteren Ausgestaltung der Erfindung ist vorgesehen, daß der Motordurchmesser auf ca. 180 mm und die axiale Motorlänge auf ca. 1/10 dieses Durchmessers bemessen ist. Die Sockelhöhe ist deutlich kleiner als die Höhe des schüsselartigen Gefäßes.

Die Erfindung wird anhand der Zeichnung näher erläutert. Es zeigen:
Fig. 1 eine Haushaltküchenmaschine mit einem Sockel, einem schüsselartigen Gefäß und einem zugeordneten Deckel schaubildlich und in Explosionsansicht,
Fig. 2 die Bodenplatte des Sockels mit Klemmelementen für einen Ständerring, mit den aktiven Motorteilen, mit dem Motor, mit dem auf Klemmelemente aufklemmbaren Ständerring und den diesen umschließenden, aus Dauermagneten mit magnetischem Rückschluß bestehenden Ring des Läufers und mit einer Läuferscheibe, in die der Ring aus Dauermagneten und magnetischem Rückschluß eingepaßt wird, mit der Antriebswelle für ein Werkzeug,
Fig. 3 einen Schnitt durch den Sockel des Gerätes mit dem Antriebsmotor längs der Linie III-III nach Fig. 2,
Fig. 4 einen Schnitt durch den Gerätesockel mit Motor längs der Linie IV-IV nach Fig. 3.

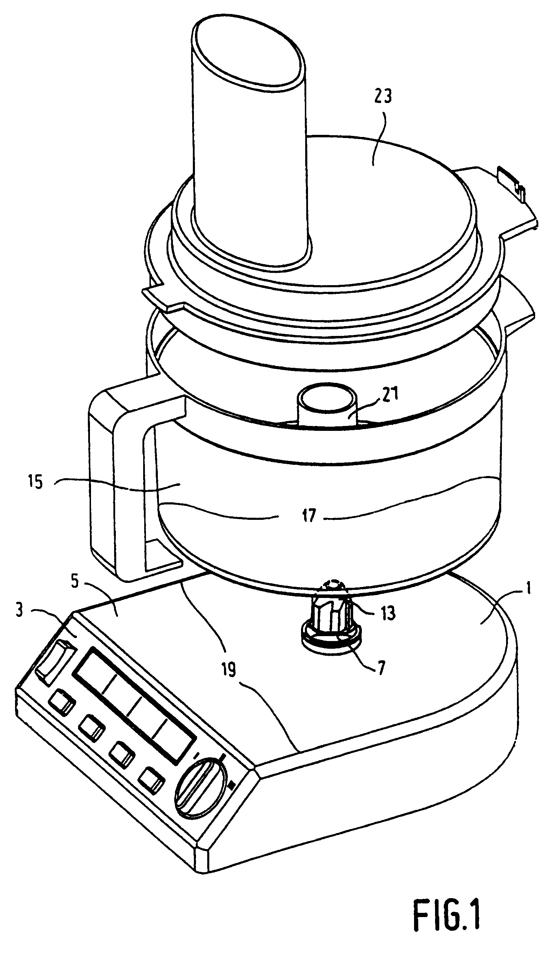

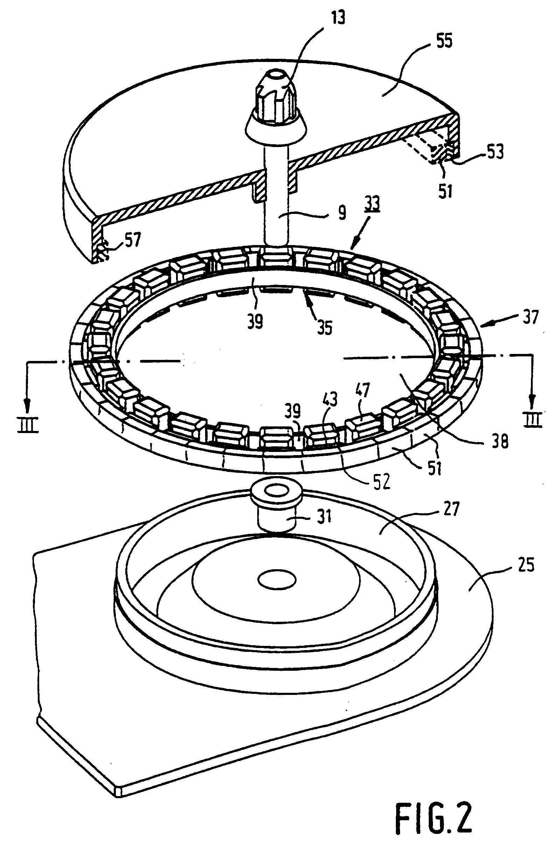

Die Explosionsdarstellungen nach den Fig. 1 und 2 zeigen einen Gerätesockel 1 einer Haushaltsküchenmaschine mit einem Schaltpult 3 an der Sockelvorderseite. In der Deckplatte 5 des Sockels befindet sich ein Durchbruch 7, durch den eine Antriebswelle eines Antriebsmotors 33 hindurchgreift, auf der ein Mitnehmer 13 angeordnet ist.

Oberhalb des Sockels 1 befindet sich ein schüsselartiges Gefäß 15, dessen Durchmesser 17 etwa dem Durchmesser 19 des Sockels 1 entspricht. In dem Gefäß ist ein Stutzen 21 vorgesehen, durch den die Antriebswelle hindurchragen kann. Oberhalb des schüsselartigen Gefäßes 15 befindet sich ein Deckel 23.

An die Bodenplatte 25 ist, wie Fig. 2, zeigt, ein Klemmring 27 gespritzt, dessen Durchmesser so bemessen ist, daß ein Eisenring 39 eines Motorständer 35 auf ihn klemmend aufsetzbar ist. In der Mitte der Bodenplatte befindet sich eine Lagerung 31 für die Welle 9.

Der Antriebsmotor 33 des Haushaltsgerätes besteht aus einem ringförmigen Ständer 35 und einem ringförmigen Läufer 37, die in der Zeichnung nach Fig. 2 vom Gehäuse losgelöst miteinander in funktionellem Kontakt dargestellt sind. Der Ständer 35 des Antriebsmotors 33 besteht aus dem Eisenring 39 mit einem Innendurchmesser von ca. 70% bis 80% des Motor-Außendurchmessers. Der Raum 38 innerhalb des Eisenringes 39 ist leer. Gleichzeitig ist das Verhältnis von Motorlänge zu Motordurchmesser auf etwa 1 : 10 bemessen, wodurch der Motor 33 außerordentlich flach wird.

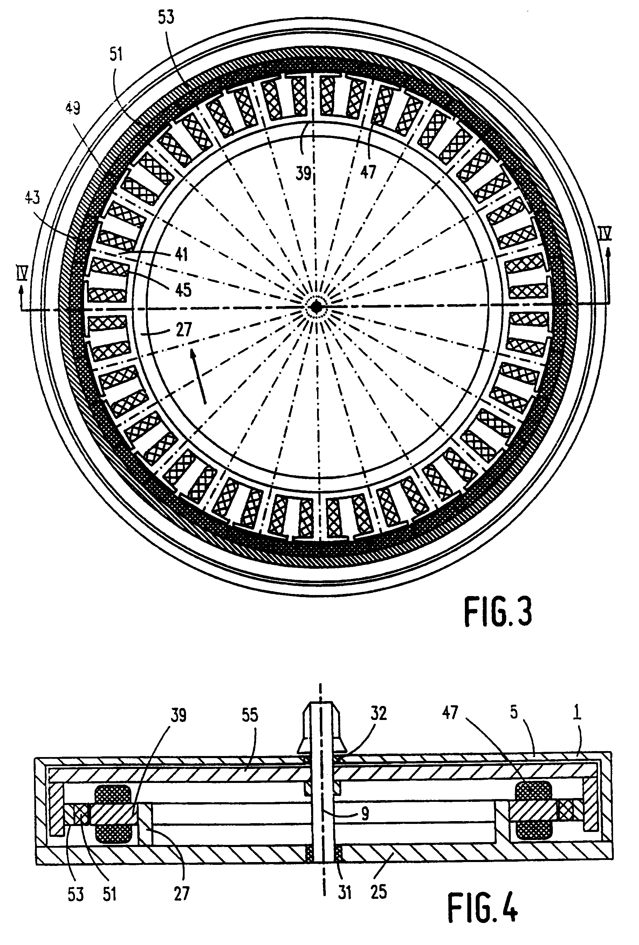

Der Eisenring 39 weist außenseitig radial vorstehende Polstege 41 auf, die an ihren äußeren Enden Polschuhe 43 tragen können. In Fig. 3 sind solche Polschuhe dargestellt. Die Polschuhe können aber auch entfallen. Der Eisenring 39 trägt im Ansführungsbeispiel vierundzwanzig Pole 45, die mit Spulen 47 bewickelt sind (Fig. 3). Eine bevorzugte Polzahl wird zwischen 12 und 36 gewählt werden.

Der Luftspalt 49 des Antriebsmotors 33 wird außenseitig begrenzt von Dauermagneten 51, die sich als Dauermaganetring 52 längs des Läufermagnetringes mit wechselnder Polarität aneinander anschließen. Außenseitig sind die Dauermagnete gegebenenfalls an einem magnetischen Rückschluß 53 befestigt. Im Ausführungsbeispiel hat der Läufermagnetring 32 Pole.

Die Dauermagnete 51 und der magnetische Rückschluß 53 sind in eine weder elektrisch noch magnetisch leitende Läuferscheibe 55 eingesetzt, die zentral die Motorwelle 9 trägt. Die Dauermagnete 51 bzw. der magnetische Rückschluß 53 mit den Dauermagneten 51 werden, wie in Fig. 2 angedeutet, in eine Aufnahmenut 57 der Läuferscheibe 55 eingesetzt.

Die Fig. 3 und 4 zeigen den Einbau des Antriebsmotors 33 innerhalb des Sockels 1. Die Antriebswelle 9 ist in der Bodenplatte 25 und in der Deckplatte 5 des Gehäusesockels 1 in Lagern 31 und 32 gelagert. Der Eisenring 39 ist dabei auf dem Klemmring 27 des Gehäusebodens 25 festsitzend angeordnet. Die Läuferscheibe 55 trägt die Dauermagnete 51 und den magnetischen Rückschluß 53, wie aus den Zeichnungen deutlich zu erkennen ist, ist der gesamte Innenraum 38 des Antriebsmotors 33 leer, und die aktiven Motorteile erstrecken sich nur längs des Motoraußenumfanges.

Der elektronisch kommutierte Permanentmagnetmotor des Gerätes ist ausgelegt für ein hohes Drehmoment von ca. 2 bis 5 Nm bei einer Drehzahl von ca. 0 bis 1.500 U/min. Ein derartiger Leistungs- und Drehzahlbereich macht ihn einsetzbar sowohl für Stand-Küchenmaschinen sowie auch für Kompakt-Küchenmaschinen. Für den Drehzahlbereich von 0 bis 1.500 U/min bewegt sich eine sinnvolle Polzahl im Bereich von 12 bis 36 Polen. Im vorgesehen Einsatzbereich, bei der vorgesehenen Leistung und Drehzahl erwärmt sich ein derart elektronisch kommutierter Permanentmagnetmotor nur so wenig, so daß er sehr eng in den Sockel 1 eingeschlossen sein kann.

Der Innendurchmesser des Antriebsmotors 33 bzw. des Eisenringes 39, der die Pole 45 trägt, sollte nicht kleiner sein als 130 mm. In einem solchen Fall kann der Außendurchmesser des Motors, d. h. des die Dauermagnete 51 umschließenden magnetischen Rückschlusses 53, in der Größenordnung von 180 mm liegen. Dies entspricht etwa der Größe üblicher schüsselartiger Gefäße von Haushaltsküchenmaschinen. Kleinere Durchmesser empfehlen sich nicht.

Ein deutlicher weiterer Vorteil der Konstruktion ist darin zu sehen, daß der Kraftarm des Motors ohne Masseerhöhung größer wird durch die Verlagerung aller aktiver Motorteile in den Umfangsbereich.

## Patentansprüche

1. Elektrische Küchenmaschine mit einem Antriebsmotor (33) mit Ständer und Läufer, der in einem Gerätesockel (1) angeordnet ist und ein auf dem Sockel stehendes schüsselartiges Gefäß (15) bzw. ein im Gefäß (15) angeordnetes Werkzeug um seine Drehachse in Umlauf versetzt, dadurch gekennzeichnet, daß
- der Ständer (35) und der Läufer (37) des Motors scheibenförmig ausgebildet sind mit einem Verhältnis von axialer Länge zu Durchmesser von ca. 1 : 10,
- der Ständer (35) und der Läufer (37) je einen Durchmesser aufweisen, der dem Gefäßdurchmesser im wesentlichen entspricht,
- sich die magnetisch aktiven Motorteile von Ständer (35) bzw. Läufer (37) ringförmig längs der Motoraußenbereiche erstrecken, während der Motorinnenraum unmagnetisch ausgebildet ist,
- der Läufer (37) einen vielpoligen Dauermagnetring (52) trägt,
- der Antriebsmotor (33) elektronisch kommutiert ist, und
- der Gerätesockel (1) als Motorgehäuse ausgebildet ist.

2. Elektrische Küchenmaschine nach Anspruch 1, dadurch gekennzeichnet, daß der Sockel (1) kaum höher zu sein braucht als ein Sockel, in dem sich ein Getriebe befindet, das von einen seitlich angeordneten Motor angetrieben wird.

3. Elektrische Küchenmaschine nach Anspruch 1, dadurch gekennzeichnet, daß der Ständer (35) aus einem im Geträtegehäuse (1) gelagerten Eisenring (39) mit nach außen vorstehenden, bewickelten Polstegen (41) besteht und daß der Läufer (37) die Polstege (41) längs des Ständerumfanges ringförmig umschließt mit sich im Ring (52) in Umfangsrichtung aneinander anschließenden Dauermagneten (51) wechselnder Polarität längs des Luftspaltes zwischen Ständerpolen (41) und Läufermagneten (51).

4. Elektrische Küchenmaschine nach Anspruch 3, dadurch gekennzeichnet, daß der Ständer-Eisenring (39) auf die Bodenplatte (25) des Sockels (1) aufgesetzt ist, wobei der Ständer-Eisenring (39) an aus der Bodenplatte (27) vorstehenden, magnetisch neutralen Klemmelementen (27) festgelegt ist.

5. Elektrische Küchenmaschine nach Anspruch 3, dadurch gekennzeichnet, daß der Läufer (37) des Antriebsmotors (33) einen von der Läuferwelle (9) getragenen flachen Zylinder aufweist, der einen Ring (52) mit den am Luftspalt befindlichen Dauermagneten (51) trägt.

6. Elektrische Küchenmaschine nach Anspruch 1, dadurch gekennzeichnet, daß der Motoraußendurchmesser auf ca. 180 mm und die axiale Motorlänge auf ca. 1/10 dieses Durchmessers bemessen ist.

## Claims

1. An electrical kitchen appliance comprising a drive motor having a stator and a rotor, which motor is arranged in an appliance base (1) and rotates a bowl-like container (15) or a tool in the container (15) about its axis of rotation, characterised in that
- the stator (35) and the rotor (37) of the motor are disc-shaped with a ratio of approximately 1:10 between axial length and diameter,
- the stator (35) and the rotor (37) each have a diameter which substantially corresponds to the container diameter,
- the magnetically active motor parts of the stator (35) and the rotor (37) extend along ring-shaped paths at the motor periphery, the inner space of the motor being non-magnetic,
- the rotor (37) carries a multi-pole permanent-magnet ring (52),
- the drive motor (33) is electronically commutated, and
- the appliance base (1) is constructed as a motor housing.

2. An electrical kitchen appliance as claimed in Claim 1, characterised in that the base (1) need hardly be any higher than a base which accommodates a drive mechanism driven by a juxtaposed motor.

3. An electrical kitchen appliance as claimed in Claim 1, characterised in that the stator (35) comprises an iron ring (39) which is supported in the appliance housing (1) and has outwardly projecting pole shanks (41) carrying coils, and the rotor (37) surrounds the pole shanks (41) along a ring-shaped path at the stator periphery with permanent magnets (51) which in the circumferential direction of the ring (52) adjoin each other with alternating polarity along the air gap between the stator poles (41) and rotor magnets (51).

4. An electrical kitchen appliance as claimed in Claim 3, characterised in that the stator iron ring (39) is mounted on the bottom plate (25) of the base (1), the stator iron ring (39) being secured to magnetically neutral clamping members (27) which project from the bottom plate (25).

5. An electrical kitchen appliance as claimed in Claim 3, characterised in that the rotor (37) of the drive motor (33) comprises a flat cylinder which is carried by the drive shaft (9) of the motor and which carries a ring (52) of permanent magnets (51) disposed at the air gap.

6. An electrical kitchen appliance as claimed in Claim 1, characterised in that the outer diameter of the motor is dimensioned to be approximately 180 mm and the axial motor length is dimensioned to be approximately 1/10 of this diameter.

## Revendications

1. Appareil ménager électrique muni d'un moteur d'entraînement (33) comportant un stator et un rotor, logé dans un socle d'appareil (1) et assurant la rotation d'un récipient en forme de bol (15) placé sur le socle ou d'un outil disposé dans le récipient (15) autour de son axe de rotation, caractérisé en ce que
- le stator (35) et le rotor (37) du moteur sont en forme de disque avec un rapport entre la longueur axiale et le diamètre égal à environ 1 : 10,
- le stator (35) et le rotor (37) présentant chacun un diamètre qui correspond essentiellement au diamètre du récipient,
- les parties du moteur magnétiquement actives du stator (35) et du rotor (37) s'étendent de façon annulaire autour de la partie extérieure du moteur, tandis que la partie intérieure du moteur est réalisée de façon non magnétique,
- le rotor (37) supporte un aimant permanent multipolaire en forme d'anneau (52),
- la commutation du moteur d'entraînement (33) se fait électroniquement, et
- le socle de l'appareil (1) est réalisé sous forme d'un boîtier de moteur.

2. Appareil ménager électrique suivant la revendication 1, caractérisé en ce que le socle (1) doit être à peine plus élevé qu'un socle dans lequel se trouve un réducteur entraîné par un moteur disposé sur le côté de l'appareil.

3. Appareil ménager électrique suivant la revendication 1, caractérisé en ce que le stator (35) est constitué d'in anneau d'acier (39) logé dans un boîtier d'appareil (1) avec des nervures polaires (41) garnies d'enroulements et en ce que le rotor (37) entoure les nervures polaires (41) à la périphérie du stator par des aimants permanents (51) de polarités alternées qui s'enchaînent en anneau (52) à la périphérie le long de l'entrefer entre les pôles du stator (41) et les aimants du rotor.

4. Appareil ménager électrique suivant la revendication 3, caractérisé en ce que l'anneau d'acier (39) du stator est placé sur la plaque de base (25) du socle (1), l'anneau d'acier (39) dit stator étant fixé à des éléments de serrage magnétiquement neutres (27) dépassant de la plaque de base (25).

5. Appareil ménager électrique suivant la revendication 3, caractérisé en ce que le rotor (37) du moteur d'entraînement (33) présente un cylindre plat porté par l'arbre du rotor (9), qui porte un anneau (52) avec les aimants permanents (51) situés le long de l'entrefer.

6. Appareil ménager électrique suivant la revendication 1, caractérisé en ce que le diamètre extérieur du rotor est d'environ 180 mm et la longueur axiale du moteur vaut environ 1 : 10 de ce diamètre.
